# EUROPEAN PATENT APPLICATION

(11) **EP 3 296 969 A1**
(43) Date of publication of application: **21.03.2018**
(21) Application number: 16792246.7
(22) Date of filing: 13.05.2016
(51) Int. Cl.: G07F 11/52, G07F 11/58, B65G 47/51

(54) **MALLEABLE UNIT DISPENSER**

(30) Priority: 13.05.2015 ES 201530651
(71) Applicant: Medical Modular System, S.A., 08018 Barcelona (ES)
(72) Inventor: MONTSERRAT FORNÍES, Isai, 08018 Barcelona (ES); NADAL JOSEPH, Gaspar, 08018 Barcelona (ES)
(74) Representative: Balder IP Law, S.L.
(86) International application number: PCT/ES2016/070368
(87) International publication number: WO 2016/181014

(57) **Abstract**

A dispenser (1) of malleable units (2), comprising a casing (3) having a dispensing area (4) and a first mechanism for storing and dispensing the malleable units (2), which comprises a belt (5), the ends of the belt (5) being joined to respective winding drums (T1, T2) with reversible direction, the mechanism comprising a resending roller (6) such that when the first drum (T1) is wound, malleable units can be stored in the first drum (T1) by catching the malleable units between the belt (5) and the belt (5) already wound on the first drum (T1), and such that when the first drum is unwound (T1), the malleable units (2) stored on the belt (5) wound on the first drum (T1) are dispensed via the dispensing area (4).

## Description

### Field of the invention

The present invention belongs to the sector of malleable unit dispensers, especially scrubs for medical personnel. In general, it involves textile and non-textile garments that are folded and packaged or non-packaged. These dispensers aim to logistically manage uniforms at points of consumption (management of stock, users and consumption) guaranteeing service 24 hours/day and 7 days/week.

### Background of the invention

Dispensers of malleable units, such as textile garments or similar, are known, which comprise a casing having a horizontal output slot to deliver the malleable units and a mechanism housed in the casing for storing and dispensing the malleable units.

EP11611556A2 describes a device of this type based on the stacking of units; in other words, the units are stored in stacks. These types of devices have the drawback that they require a complicated mechanism and in the case of scrubs for medical personnel, it has been determined that many dispensing errors occur that jam and render the machine inoperable.

Another way of dispensing clothing units is described in US6223934B, wherein these units are stored in wound belts, such that when they are unwound, they supply the malleable units. However, the device described is complex and takes up a lot of space, especially space on a horizontal plane. This is a major drawback when it is a dispenser intended to be available in corridors, where the space is reduced and may be heavily transited.

Moreover, machines for collecting and storing garments used by medical personnel are known, in which the garments are introduced through a slot in order to be stored between two belts that are simultaneously wound on a storage drum for compressing the garments, for the purpose of subsequently taking them to a washing station. One example of this type of machine is described in US6439500B.

In addition to resolving the drawbacks mentioned, a dispenser must have the following characteristics:
- It is modular, to allow for multiple layouts and the transportation of the system;
- It is scalable, in other words, it can be enlarged or reduced as needed;
- It is a dispensing mechanism of maximum simplicity (instead of being a pneumatic mechanism);
- It is easy to handle (use);
- It allows for reduced operation times (reloading, dispensing, etc.);
- It is compact and takes up little space (surface) especially in the horizontal direction;
- It is reliable, in other words, it has high usage rates.

### Description of the invention

For the purpose of meeting the needs listed, the present invention proposes a malleable unit dispenser comprising:
- a casing having a dispensing area to deliver the malleable units and a first mechanism housed in the casing for storing and dispensing the malleable units,
- the mechanism comprising a first belt for storing and dispensing the malleable units, the ends of the first belt being joined to a first winding drum and a second winding drum, both with reversible direction,
wherein:
- the first drum is provided on top of the second drum, the dispensing area being provided at an intermediate height between the two drums,
- the mechanism comprises a first resending roller provided in the dispensing area, such that it resends the first belt coming from the first drum to the second drum,
- the first belt being provided on the first drum, such that when the first belt of the first drum is unwound, the unwound section is provided under the first drum,
such that:
- when the first drum is wound, malleable units can be stored in the first drum by catching the malleable units between the belt and the belt already wound on the first drum; and
- when the first drum is unwound, the malleable units stored on the belt wound on the first drum are dispensed via the dispensing area.

This device is of a simple construction, it is able to store and dispense malleable units with the minimum number of components, and furthermore, through the practical implementation thereof, the inventors have been able to verify that jams can be reduced to zero; in other words, the mechanism can carry out many delivery and reloading cycles without jamming or without failures. In addition, as will be discussed later, the mechanism can be repeated in the same casing, by means of a vertical arrangement, such that elements shaped like a cabinet can be obtained, which take up little horizontal space, but which make optimal use of the vertical space.

In some embodiments, the dispenser comprises a second belt, one of the ends thereof being joined to the first drum, such that the second belt is wound along with the first belt to press the malleable units between both belts, the dispenser comprising a second resending roller provided adjacent to the first resending roller and a winding drum of the other end of the second belt, such that the space between the resending rollers forms the dispensing area.

This arrangement is especially advantageous, since it allows the malleable units to move without becoming deformed, such that the space they take up and the shape thereof are controlled until they are dispensed. In particular, this avoids the need to provide elements, such as a wedge, to prevent units from becoming hooked on the drum. Moreover, the path of the garments is far better controlled when two belts are used.

In some embodiments, the dispenser comprises means for regulating the distance between the first and second resending rollers.

In this way, the resulting slot between the rollers can be adjusted and adapted to the different thicknesses of the dispensed units.

In some embodiments, the winding drum of the other end of the second belt is the second drum, such that both belts are wound and unwound on the same drums.

Winding the second belt by means of an additional drum may be implemented. In terms of costs, it is preferable to use the two drums to operate the two belts, although this implies providing additional resending means for the second belt.

In some embodiments, the dispenser comprises tensioning means of the second belt provided between the second resending roller and the second drum.

When using both drums for both belts, it may occur that the belts are not wound at the same rate and one of them is not tense. To avoid this, tensioning means are provided.

Preferably, the tensioning means comprise at least two additional resending rollers of the second belt, and a mobile resending roller provided to make the second belt tense in the section of the second belt between the two additional resending rollers.

In some embodiments, other additional resending rollers are provided, such that they make it possible to pass the second belt through the side of the first drum that is opposite to the side where the dispensing area is located, and bring one end of the second belt to the second drum.

In some embodiments, the casing comprises a delivery slot provided in front of the dispensing area, such that the garments that come out from between the first and second resending rollers are guided to the delivery slot.

In other embodiments, the casing comprises a reception space provided under the dispensing area, such that the garments that come out from between the first and second resending rollers fall into the reception space. In this case, an access hatch to the reception space may be provided.

According to several possibilities of the invention, which may be combined, provided that it is technically possible:
- each of the drums has an actuating motor with reversible direction, such that the mechanism can be easily automated and controlled.
- the dispenser comprises a reloading ramp for malleable units provided on the belt section provided on the section comprised between the belt wound on the first drum and the resending roller.
- the reloading ramp is made up of a mobile wedge in movement between a position adjacent to the entry slot and a position in which it presses the belt wound on the first drum, such that the wedge functions as a guide for the malleable units towards the unwound belt section between the belt wound on the first drum and the resending roller.
- the dispenser comprises a return spring of the wedge towards the first drum.
- the wedge comprises a handle to be able to bring it to the reloading position, the wedge and casing having complementary means for retaining the wedge in the reloading position.
- the reloading ramp comprises a tilting reloading tray provided above the output slot, such that the reloading position works with the wedge to form the reloading ramp. This allows the operator to reload the dispenser.
- the dispenser comprises at least one approximately horizontal tilting arm on which the first drum is mounted, and lower support rollers of the belt wound on the first drum, such that when wound, the section of the unwound belt remains at the same level. Preferably in this case, it is provided that the tilting arm comprises a guide on the mobile end thereof that allows for limited movement of the shaft of the first drum, for the purpose of allowing for a component with horizontal movement of the drum, in order to keep it within limited margins according to the vertical direction when the drum is lifted, pivoting on the arm.
- another variant of the arrangement of the tilting arm consists of arranging it vertically and hanging from the rotational shaft.
- the dispenser comprises a sensor for detecting the passage of the malleable units through the outlet slot and reloading ramp, for the purpose of precisely determining the passage of the deliverable malleable units through the output slot and the malleable units reloaded through the reloading ramp, respectively, and to therefore correctly count the units.
- the casing comprises a second mechanism identical to the first mechanism, the first and second mechanisms being provided one on top of the other, such that the same dispenser can supply malleable units of different types, sizes or colors. If the units are scrubs, L-sized white pants can be offered in the top part and L-sized white shirts can be offered in the bottom part.
- the casing comprises joining means for joining with another dispenser module at the sides, according to any of the variants mentioned. In this way, a modular and scalable system is configured.
- the casing comprises an upper transverse channel for the passage of a communications and power bus intended to establish communications and distribute power to a plurality of adjacent dispensers.
- the main dispenser module comprises a control screen and a user identification ID device.
- the casing has a depth comprised of between 700 and 800 mm.
- the casing comprises a front door for reloading and inspection.
- the dispenser comprises a communications and control unit that has an associated IP.

Lastly, the malleable units are textile and non-textile garments, especially scrubs for medical personnel.

### Brief description of the figures

As a complement to the description, and for the purpose of helping to make the characteristics of the invention more readily understandable, in accordance with a practical embodiment thereof, said description is accompanied by a set of figures constituting an integral part thereof, which by way of illustration and not limitation represent the following:
Figure 1 is a schematic cross-sectional view of the mechanism shown in the dispensing mode of malleable units, according to a first embodiment.
Figure 2 is a schematic cross-sectional view of the mechanism shown in the reloading mode, according to the first embodiment.
Figure 3 shows a dispenser made up of two dispenser modules, according to the invention.
Figure 4 shows another embodiment of the dispenser, especially designed for paper garments.
Figure 5 shows another embodiment of the dispenser, especially designed for textile garments.
Figure 6 is a perspective view of a complete dispenser that incorporates the solution shown in Figure 5, in other words, provided with a lower collection drawer.

### Description of embodiments of the invention

### Embodiment with only one belt

As can be seen in the figures, according to a first embodiment, the dispenser 1 of malleable units 2 comprises:
- a casing 3 having a horizontal output slot 4' to deliver the malleable units 2 and a first mechanism housed in the casing 3 for storing and dispensing the malleable units 2,
- the mechanism comprises a belt 5 for storing and dispensing the malleable units 2, the ends of the belt 5 being joined to respective winding drums T1, T2 with reversible direction.

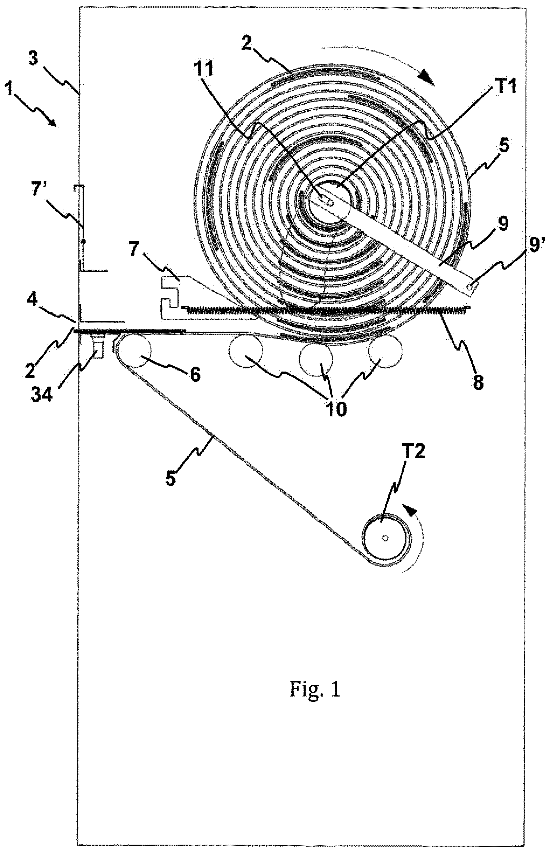

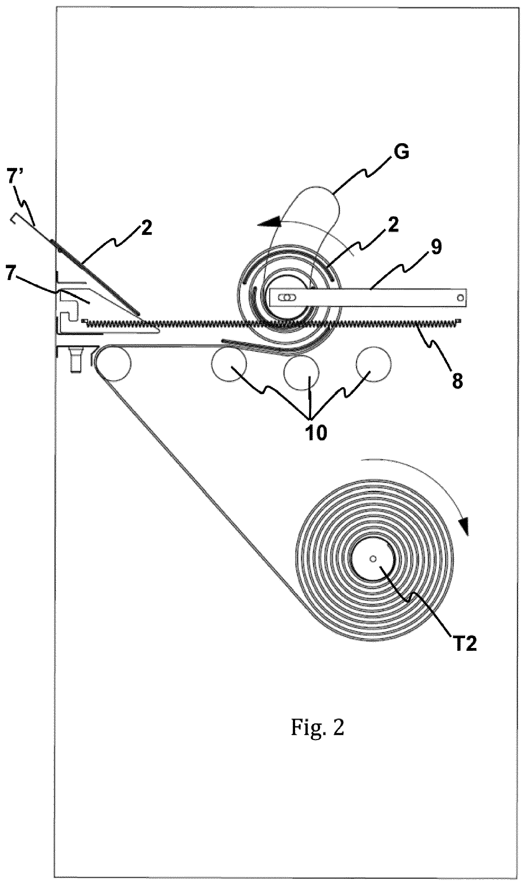

In this embodiment:
- the mechanism comprises a resending roller 6 provided close to and under the output slot 4',
- the first drum T1 being provided above the level of the output slot 4',
- the belt 5 being provided on the first drum T1, such that when the belt of the first drum T1 is unwound, the unwound section is provided under the first drum T1,
- the second drum T2 being provided under the level of the output slot 4' to keep the belt 5 tense,
such that, as shown in Figure 1, when the first drum T1 is wound, malleable units can be stored in the first drum T1 by catching the malleable units between the belt 5 and the belt 5 already wound on the first drum T1, and such that, as shown in Figure 2, when the first drum T1 is unwound, the malleable units 2 stored on the belt 5 wound on the first drum T1 are dispensed via the output slot 4'.

Very preferably, each of the drums T1, T2 has an actuating motor with reversible direction, for the purpose of being able to automate the device.

As can be seen in Figures 1 and 2, the dispenser comprises a reloading ramp 7, 7' for malleable units 2 provided inside the casing 3, above the level of the output slot 4', and on the belt 5 section provided on the section comprised between the belt 5 wound on the first drum T1 and the resending roller 6. This ramp allows the operator responsible for reloading to correctly position the units on the belt during reloading.

The reloading ramp is made up of a mobile wedge 7 in movement between a position adjacent to the entry slot 4' and a position in which it presses the belt 5 wound on the first drum T1, such that:
- When reloading, the wedge 7 carries out a first function as a guide for the malleable units towards the unwound belt 5 section between the belt 5 wound on the first drum T1 and the resending roller 6, as shown in Figure 2 and
- When dispensing, it carries out a second function to press on the wound belt 5 for correct winding and unwinding of the belt 5, as shown in Figure 1.

It also provides a return spring 8 of the wedge 7 towards the first drum T1, so that it presses the drum during the winding thereof.

The wedge 7 comprises a handle (not shown) to be able to bring it to the reloading position, the wedge 7 and casing 3 having complementary means for retaining the wedge 7 in the reloading position. In this way, the operator can carry out reloading comfortably.

As shown in Figures 1 and 2, the mechanism comprises at least one tilting arm 9 on which the first drum T1 is mounted, and lower support rollers 10 of the belt T1 wound on the first drum T1, such that when wound, the section of the unwound belt 5 remains at the same level, by being able to be lifted in the drum.

The tilting arm 9 comprises on the movable end thereof a guide 11 that allows limited movement of the shaft of the first drum T1. In this way, when winding the belt on the drum, and when the arm lifts as it pivots around the shaft 9', it makes the first drum move slightly to the side, which prevents it from being on a limited margin according to the horizontal dimension. Upon providing this additional degree of freedom, it is a good idea to provide a side guide panel G that carries the drum T1 along the desired path.

### Preferred embodiment with two belts

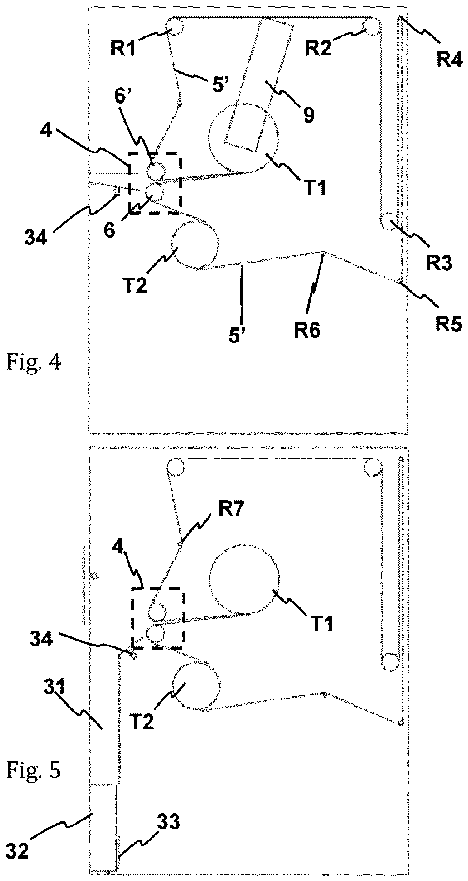

According to another embodiment of the invention, and as shown in Figures 4 and 5, the dispenser 1 of malleable units 2 comprises:
- a casing 3 having a dispensing area 4 to deliver the malleable units 2 and a first mechanism housed in the casing 3 for storing and dispensing the malleable units 2,
- the mechanism comprising a first belt 5 for storing and dispensing the malleable units 2, the ends of the first belt 5 being joined to a first winding drum T1 and a second winding drum T2, both with reversible direction, and
- the first drum T1 is provided on top of the second drum T2, the dispensing area 4 being provided at an intermediate height between the two drums T1, T2,
- the mechanism comprises a first resending roller 6 provided in the dispensing area 4, such that it resends the first belt 5 coming from the first drum T1 to the second drum T2,
- the first belt 5 being provided on the first drum T1, such that when the first belt 5 of the first drum T1 is unwound, the unwound section is provided under the first drum T1,
such that:
- when the first drum T1 is wound, malleable units can be stored in the first drum T1 by catching the malleable units between the belt 5 and the belt 5 already wound on the first drum T1; and
- when the first drum T1 is unwound, the malleable units 2 stored on the belt 5 wound on the first drum T1 are dispensed via the dispensing area 4.

In this second embodiment, a second belt 5' is provided, one of the ends thereof being joined to the first drum T1, such that the second belt 5' is wound along with the first belt 5 to press the malleable units 2 between both belts, the dispenser comprising a second resending roller 6' provided adjacent to the first resending roller 6 and a winding drum of the other end of the second belt 5', such that the space between the resending rollers 6, 6' forms the dispensing area 4. Therefore, while they are in the dispensing drum T1 and until they reach the dispensing area 4, the garments are guided between the two belts 5 and 5'.

The winding drum of the other end of the second belt 5' is the second drum T2, such that both belts are wound and unwound on the same drums T1, T2. To avoid differences in tension between both belts, tensioning means of the second belt 5' are provided between the second resending roller 6' and the second drum T2.

These tensioning means comprise at least two additional resending rollers R2, R4 of the second belt 5', and a mobile resending roller R3 provided to make the second belt 5' tense in the section of the second belt 5' between the two additional resending rollers.

Other additional resending rollers R1, R5, R6 are also provided, such that they make it possible to pass the second belt 5' through the side of the first drum T1 that is opposite to the side where the dispensing area 4 is located, and bring one end of the second belt 5' to the second drum T2.

Two variants are provided for the second embodiment of the invention.

In a first variant, shown schematically in Figure 4 and especially designed for disposable paper garments, the casing 3 comprises a delivery slot 4' provided in front of the dispensing area 4, such that the garments that come out from between the first and second resending rollers 6, 6' are guided toward the delivery slot 4'.

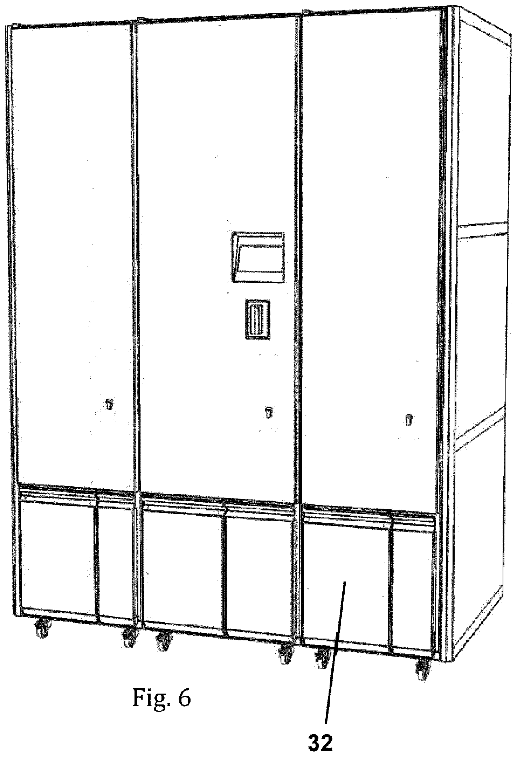

In a second variant, shown schematically in Figure 5 and especially designed for more voluminous garments, such as textiles, the casing 3 comprises a reception space 31 provided under the dispensing area 4, such that the garments 2 that come out from between the first and second resending rollers 6, 6' fall into the reception space 31. In this case, as shown in Figures 5 and 6, an access hatch 32 to the reception space 31 is provided. An RFID reader antenna 33 is also provided in the reception space 31, preferably at the height of the access hatch 32 where the garments 2 end up, such that the dispensed products can be identified.

In all embodiments, a photocell 34 can be provided for detecting the passage of the dispensed products 2.

In the two embodiments, a tilting reloading tray 7' can be provided above the output slot 4, such that the reloading position works with the wedge 7 to form the reloading ramp 7, 7', providing the operator with added comfort. Obviously, reloading can also be carried out through the output slot 4', with the reverse rotation of the motors.

A sensor 34 is also provided for detecting the passage of the malleable units 2 through the output slot 4, preferably a photocell, although other types of sensors can also be used.

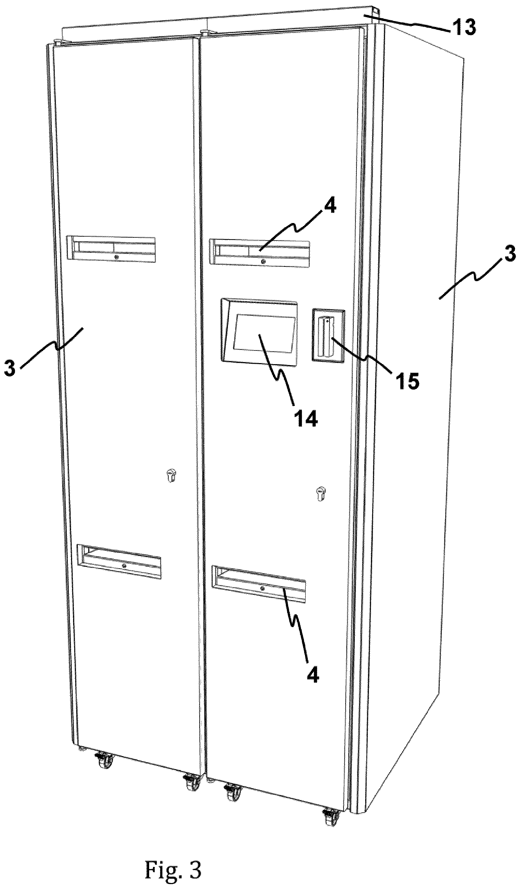

As shown in Figure 3, the casing comprises a second mechanism identical to the first mechanism, the first and second mechanisms being provided one on top of the other.

The claimed dispenser makes it possible to reduce, without affecting storage capacity, the depth of the casing 3 by up to 750 mm, an acceptable measurement in order to be able to place the dispenser in a hospital corridor, for example.

The casing 3 comprises a front door for reloading and inspection, the opening of which allows the user to use the mechanism in the reloading mode.

The dispenser is especially designed as a scalable modular unit, which makes it possible to obtain a larger or smaller dispenser that can dispense different types of malleable units. Figure 3 shows a dispenser made up of two basic unit dispenser modules (master module and slave module), in which each module houses two dispensing and storage mechanisms and two output slots for malleable units. The modularity thereof also makes it possible to replace defective modules in minimum time, which maximizes the usage time of the dispenser.

Thus, the casing comprises joining means for joining with another dispenser 1 at the sides, according to any of the preceding claims. The dispensers are engaged at the sides, without needing to have side covers. Once the desired dispenser size is attained, covers are secured to the side ends.

As can be seen in Figure 3, the main dispenser module comprises a control screen 14 and a user identification device 15. The engaged slave module does not need these elements, since it has a transverse channel 13 for the passage of a communications and power bus intended to establish communications and distribute power to a plurality of adjacent slave dispenser modules 1. To do so, each of the dispenser machines is provided with a communications and control unit that has an associated IP.

The dispenser according to the invention is especially designed to dispense malleable units 2 that are textile garments, paper garments, diapers or similar, especially scrubs for medical personnel or pajamas for patients.

In this text, the word "comprises" and its variants such as "comprising", etc. should not be understood in an exclusive sense, i.e. they do not exclude the possibility of that which is described includes other elements.

Also, the invention is not limited to the specific embodiments described herein, but rather encompasses the variations that one skilled in the art could make, within the scope of what may be deduced from the claims.

## Claims

1. A dispenser (1) of malleable units (2) comprising:
- a casing (3) having a dispensing area (4) to deliver the malleable units (2) and a first mechanism housed in the casing (3) for storing and dispensing the malleable units (2),
- the mechanism comprising a first belt (5) for storing and dispensing the malleable units (2), the ends of the first belt (5) being joined to a first winding drum (T1) and a second winding drum (T2), both with reversible direction,
**characterized in that**
- the first drum (T1) is provided on top of the second drum (T2), the dispensing area (4) being provided at an intermediate height between the two drums (T1, T2),
- the mechanism comprises a first resending roller (6) provided in the dispensing area (4), such that it resends the first belt (5) coming from the first drum (T1) to the second drum (T2),
- the first belt (5) being provided on the first drum (T1), such that when the first belt (5) of the first drum (T1) is unwound, the unwound section is provided under the first drum (T1),
such that:
- when the first drum (T1) is wound, malleable units can be stored in the first drum (T1) by catching the malleable units between the belt (5) and the belt (5) already wound on the first drum (T1); and
- when the first drum (T1) is unwound, the malleable units (2) stored on the belt (5) wound up in the first drum (T1) are dispensed via the dispensing area (4).

2. The dispenser according to claim 1, which comprises a second belt (5'), one of the ends thereof being joined to the first drum (T1), such that the second belt (5') is wound along with the first belt (5) to press the malleable units (2) between both belts, the dispenser comprising a second resending roller (6') provided adjacent to the first resending roller (6) and a winding drum of the other end of the second belt (5'), such that the space between the resending rollers (6, 6') forms the dispensing area (4).

3. The dispenser according to claim 2, wherein the winding drum of the other end of the second belt (5') is the second drum (T2), such that both belts are wound and unwound on the same drums (T1, T2).

4. The dispenser according to claim 3, which comprises tensioning means of the second belt (5') provided between the second resending roller (6') and the second drum (T2).

5. The dispenser according to claim 4, wherein the tensioning means comprise at least two additional resending rollers (R2, R4) of the second belt (5'), and a mobile resending roller (R3) provided to make the second belt (5') tense in the section of the second belt (5') between the two additional resending rollers.

6. The dispenser according to claim 5, which comprises other additional resending rollers (R1, R5, R6) provided such that they make it possible to pass the second belt (5') through the side of the first drum (T1) that is opposite to the side where the dispensing area (4) is located, and bring one end of the second belt (5') to the second drum (T2).

7. The dispenser according to any of the claims 2 to 6, wherein the casing (3) comprises a delivery slot (4') provided in front of the dispensing area (4), such that the garments that come out from between the first and second resending rollers (6, 6') are guided to the delivery slot (4').

8. The dispenser according to any of the claims 2 to 6, wherein the casing (3) comprises a reception space (31) provided under the dispensing area (4), such that the garments (2) that come out from between the first and second resending rollers (6, 6') fall into the reception space (31).

9. The dispenser according to claim 8, which comprises an access hatch (32) to the reception space (31).

10. The dispenser according to any of the preceding claims, wherein each of the drums (T1, T2) has an actuating motor with reversible direction.

11. The dispenser according to any of the preceding claims, which comprises a reloading ramp (7') for malleable units (2).

12. The dispenser according to any of the preceding claims, which comprises at least one tilting arm (9) on which the first drum (T1) is mounted.

13. The dispenser according to any of the preceding claims, which comprises a sensor (34) for detecting the passage of the malleable units (2) through the outlet slot (4).

14. The dispenser according to any of the preceding claims, wherein the casing comprises a second mechanism identical to the first mechanism, the first and second mechanisms being provided one on top of the other.

15. The dispenser according to any of the preceding claims, wherein the casing comprises joining means for joining with another dispenser (1) at the sides, according to any of the preceding claims.

16. The dispenser according to any of the preceding claims, wherein the casing (3) comprises a transverse channel (13) for the passage of a communications and power bus intended to establish communications and distribute power to a plurality of adjacent dispensers (1).

17. The dispenser according to any of the preceding claims, which comprises a control screen (14) and a user identification device (15).

18. The dispenser according to any of the preceding claims, wherein the casing (3) has a depth comprised of between 700 and 800 mm.

19. The dispenser according to any of the preceding claims, wherein the casing (3) comprises a front door for reloading and inspection.

20. The dispenser according to any of the preceding claims, which comprises a communications and control unit that has an associated IP.

21. The dispenser according to any of the preceding claims, wherein the malleable units (2) are textile garments, paper garments, diapers or similar, especially scrubs for medical personnel or pajamas for patients.

22. The dispenser according to claim 2 and any of the dependent claims thereof, which comprises means for regulating the distance between the first and second resending rollers (6, 6').
